# EUROPEAN PATENT APPLICATION

(11) **EP 4 746 153 A1**
(43) Date of publication of application: **20.05.2026**
(21) Application number: 24866785.9
(22) Date of filing: 12.03.2024
(51) Int. Cl.: H01M 50/244, H01M 50/207, H01M 50/249

(54) **BATTERY AND VEHICLE**

(30) Priority: 22.09.2023 CN 202322590649 U
(71) Applicant: Contemporary Amperex Technology Co., Limited, Ningde, Fujian 352100 (CN)
(72) Inventor: WU, Kai, Ningde, Fujian 352100 (CN); WANG, Yalei, Ningde, Fujian 352100 (CN); WANG, Zhi, Ningde, Fujian 352100 (CN); CHEN, Liangmei, Ningde, Fujian 352100 (CN); CAO, Gen, Ningde, Fujian 352100 (CN); CHAN, Libing, Ningde, Fujian 352100 (CN); WANG, Liangyi, Ningde, Fujian 352100 (CN); LI, Shuo, Ningde, Fujian 352100 (CN)
(74) Representative: Ran, Handong
(86) International application number: PCT/CN2024/081259
(87) International publication number: WO 2025/060358

(57) **Abstract**

A battery (100) and a vehicle (1000). The battery (100) comprises a case (10) and a plurality of battery cells (210). The case (10) has a clearance part (15) configured for providing clearance for side members (50) of a vehicle (1000), wherein the clearance part (15) runs through the case (10) in a first direction (x), and the openings of the clearance part (15) face a second direction (z). At least some of the plurality of battery cells (210) are disposed inside the case (10), and with regard to the projections of the plurality of battery cells (210) in a third direction (y), the projection of at least one battery cell (210) overlaps the projection of the clearance part (15). The first direction (x), the second direction (z) and the third direction (y) are perpendicular in pairs, and the third direction (y) is the direction of width of the clearance part (15).

## Description

### CROSS-REFERENCE TO RELATED APPLICATION

The present application claims priority to Chinese patent application No. 202322590649.0 filed on 22 September 2023 and titled "BATTERY AND VEHICLE," the entire content of which is incorporated herein by reference.

### TECHNICAL FIELD

The present application relates to the technical field of batteries, and in particular, to a battery and a vehicle.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor regarding the development thereof.

In the development of the battery technology, how to improve the energy density of batteries is a technical problem to be urgently solved.

### SUMMARY OF THE INVENTION

The present application provides a battery and a vehicle. The technical solutions provided in the present application can improve the volumetric energy density of the battery.

The present application is implemented through the following technical solutions:
in a first aspect, the present application provides a battery, comprising a case and a plurality of battery cells. The case has an avoidance portion for avoiding a longitudinal beam of a vehicle, wherein the avoidance portion runs throughout the case along a first direction, and an opening of the avoidance portion faces a second direction. The plurality of the battery cells are arranged inside the case, wherein a projection of at least one of the battery cells along a third direction overlaps with a projection of the avoidance portion along the third direction. The first direction, the second direction, and the first direction are perpendicular pairwise, and the third direction is a width direction of the avoidance portion.

In the above solutions, the avoidance portion capable of avoiding the longitudinal beam of the vehicle is arranged on the case, so that the case can reasonably utilize the space of the longitudinal beam in the second direction, and improve the space utilization of the battery in the second direction. When the battery is used in the vehicle, the battery and the longitudinal beam jointly occupy partial space in the second direction, so that the vehicle has a compact structure, thus having the advantage of improving the ground clearance or cargo capacity.

Position layout of the plurality of the battery cells is defined in such a way that the projection of the at least one of the battery cells in the third direction overlaps with the projection of the avoidance portion in the third direction, so that the at least one of the battery cells can reasonably utilize lateral space of the longitudinal beam, and so that more battery cells can be installed on the vehicle, thereby improving, for the vehicle, the energy density of the battery, and improving the range of the vehicle.

According to some embodiments of the present application, at least two layers of the battery cells are stacked in the case along the second direction. Among the at least two layers of the battery cells, a projection of at least one of the battery cells in at least one layer of the battery cells along the third direction and the projection of the avoidance portion along the third direction overlap with each other, and a projection of at least one of the battery cells in at least one another layer along the third direction is completely misaligned with the projection of the avoidance portion along the third direction.

In the above solutions, the battery cells provided in the case comprise at least two layers of stacked battery cells. A part of the at least two layers of the battery cells are located laterally on the avoidance portion in the third direction, to reasonably utilize the lateral space of the longitudinal beam when the battery is used in the vehicle; and the other part of the at least two layers of the battery cells and the avoidance portion may be misaligned with each other in the second direction, to reasonably utilize the space of the longitudinal beam in the second direction when the battery is used in the vehicle, so that more battery cells can be installed on the vehicle, thereby improving, for the vehicle, the energy density of the battery, and improving the range of the vehicle.

According to some embodiments of the present application, the battery further comprises thermal management components for regulating temperatures of the battery cells. A plurality of the battery cells located on one side of the avoidance portion along the third direction and located on a same layer are connected to a given one of the thermal management components.

In the above solutions, the thermal management components are provided, thereby regulating the temperatures of the battery cells, reducing the risk of thermal runaway of the battery cells, and making the battery highly reliable. The plurality of the battery cells located on the one side of the avoidance portion along the third direction and located on the same layer are acted upon by a given one of the thermal management components, which can, compared with the battery cells being acted upon by different thermal management components, not only save the space occupied by the thermal management components and increase the volumetric energy density of the battery, but also improve the consistency of temperature regulation, so that the temperatures among the battery cells tend to be consistent, so as to have high reliability.

According to some embodiments of the present application, a plurality of the battery cells are provided on either side of the avoidance portion along the third direction. The battery cells located on different sides of the avoidance portion along the third direction are connected to different thermal management components respectively.

In the above solutions, on the one hand, the plurality of the battery cells are arranged on both sides of the avoidance portion along the third direction, thereby reasonably utilizing the space on both sides of the longitudinal beam when the battery is used in the vehicle, increasing the energy density of the battery, and increasing the range of the vehicle. On the other hand, the temperatures of the battery cells on both sides of the avoidance portion along the third direction are regulated through different thermal management components respectively, thereby instantly regulating the temperatures of the battery cells at different sites, effectively improving the thermal management ability of the battery, reducing the risk of thermal runaway of the battery, and making the battery highly reliable.

According to some embodiments of the present application, at least one of the battery cells is provided on one side of the avoidance portion facing the inside of the battery along the second direction.

In the above solutions, the at least one battery cell is provided on one side of the avoidance portion along the second direction and inside the case, thereby reasonably utilizing the space below the longitudinal beam when the battery is used in the vehicle, so that the vehicle can be provided with more battery cells to improve the range of the vehicle.

According to some embodiments of the present application, the battery cells located on one side of the avoidance portion along the second direction and the battery cells located on one side of the avoidance portion along the third direction are connected to different thermal management components.

In the above solutions, different thermal management components are used to respectively regulate the temperatures of the battery cells located laterally on the avoidance portion along the third direction and the temperatures of the battery cells located laterally on the avoidance portion along the second direction, thereby instantly regulating the temperatures of the battery cells at different sites, effectively improving the thermal management ability of the battery, reducing the risk of thermal runaway of the battery, and making the battery highly reliable.

According to some embodiments of the present application, the plurality of the battery cells located on a same side of the avoidance portion along the second direction are connected to a given one of the thermal management components.

In the above solutions, the plurality of the battery cells located on the same side of the avoidance portion along the second direction are acted upon by a given one of the thermal management components, thereby improving the consistency of temperature regulation of the battery cells, so that the temperatures among the plurality of the battery cells located on the same side of the avoidance portion along the second direction tend to be consistent, thereby effectively reducing the risk of thermal runaway of the plurality of the battery cells, and making the battery highly reliable.

According to some embodiments of the present application, the battery further comprises thermal management components for regulating temperatures of the battery cells. The battery comprises a battery module, the battery module comprising a plurality of the battery cells. The battery module comprises a first battery module and a second battery module respectively located on both sides of the avoidance portion along the third direction, and further comprises at least one third battery module located on one side of the avoidance portion facing the inside of the battery along the second direction, and the first battery module and the second battery module are located on a same side of the third battery module along the second direction. The first battery module, the second battery module, and the third battery module are connected to different thermal management components respectively.

Among the above solutions, a solution of first constituting battery modules from the plurality of the battery cells and then assembling the battery modules into the case to form a battery can improve the assembly efficiency of the battery. Based on the avoidance portion, the first battery module, the second battery module, and the third battery module are arranged inside the case, thereby allowing the battery cells to reasonably utilize the space inside the case, making the battery have a high volumetric energy density, reasonably utilizing the lateral space of and the space below the longitudinal beam when the battery is used in the vehicle, and improving the range of the vehicle. The temperatures of the first battery module, the second battery module, and the third battery module are regulated through different thermal management components, thereby instantly regulating the temperatures of the first battery module, the second battery module, and the third battery module, reducing the risk of thermal runaway of the battery, and making the battery highly reliable.

According to some embodiments of the present application, a plurality of third battery modules are provided on one side of the avoidance portion facing the inside of the battery along the second direction, and the plurality of third battery modules are connected to a given one of the thermal management components.

In the above solutions, the plurality of third battery modules are acted upon by a given one of the thermal management components, thereby improving the consistency of temperature regulation of the battery cells, so that the temperatures among the plurality of the battery cells on the avoidance portion facing the inside of the battery along the second direction tend to be consistent, thereby effectively reducing the risk of thermal runaway of the plurality of the battery cells, and making the battery highly reliable.

According to some embodiments of the present application, the first battery module, the second battery module, and the third battery module each comprise a plurality of the battery cells arranged in a same manner.

In the above solutions, the battery cells in the first battery module, the second battery module, and the third battery module are arranged in the same manner, that is, the first battery module, the second battery module, and the third battery module may have a same battery module structure, so that the assembly of the battery modules in the case is less difficult and highly efficient.

According to some embodiments of the present application, each of the battery modules comprises a plurality of battery cell groups, the plurality of battery cell groups are arranged side by side along a length direction of the battery cells, and each of the battery cell groups comprises battery cells stacked along a thickness direction of the battery cells. The battery module further comprises an end plate located on one side of the plurality of battery cell groups along the thickness direction of the battery cells, and a projection of the end plate and projections of the plurality of battery cell groups overlap with each other along the thickness direction of the battery cells.

In the above solutions, the plurality of battery cell groups are arranged, and the plurality of the battery cells are fastened on a same side through an end plate to form a battery module, so that the battery module has a high volumetric energy density.

According to some embodiments of the present application, the case comprises a first case portion and two second case portions respectively located on both sides of the first case portion along the third direction, and the first case portion and the two second case portions jointly form the avoidance portion.

In the above solutions, the first case portion and the second case portions are spaced from each other to form a concave portion, and the concave portion can avoid the longitudinal beam of the vehicle. The two second case portions are provided, thereby forming two concave portions on both sides of the first case portion, and avoiding a pair of longitudinal beams of the vehicle. When the battery is used in the vehicle, the battery and the longitudinal beams jointly occupy partial space in the second direction, so that the vehicle has a compact structure, thus having the advantage of improving the ground clearance or cargo capacity.

According to some embodiments of the present application, same ends of the two second case portions protrude from the first case portion along the second direction to form the avoidance portion between an end wall of the first case portion perpendicular to the second direction and side walls of the two second case portions facing the first case portion.

In the above solutions, the second case portions are arranged to protrude from the first case portion, so that the battery can be provided with more battery cells using the space on both sides of the longitudinal beam, thereby improving the energy density of the battery, or transferring the battery cells that originally need to be arranged below the longitudinal beam to both sides of the longitudinal beam, and increasing the ground clearance of the vehicle.

According to some embodiments of the present application, the number of layers of the battery cells provided in the first case portion is smaller than the number of layers of the battery cells provided in the second case portions.

In the above solutions, a larger number of layers of the battery cells are arranged in a second case, thereby reasonably utilizing the space on both sides of the longitudinal beam to provide more battery cells, and increasing the volumetric energy density of the battery.

According to some embodiments of the present application, the battery further comprises a partition element located at a boundary between the first case portion and the second case portions.

In the above solutions, a partition element is arranged at the boundary between the first case portion and the second case portion, which can, on the one hand, separate the battery cells in the first case portion from the battery cells in the second case portion, and reduce the risk of thermal runaway; and on the other hand, improve the structural strength of the case, and reduce the risk of bending along the boundary between the first case portion and the second case portion when the battery is impacted, so that the battery is highly reliable.

According to some embodiments of the present application, the avoidance portion comprises a first avoidance portion and a second avoidance portion spaced along the third direction, the battery further comprises a butting structure located between the first avoidance portion and the second avoidance portion for butting with the vehicle to achieve current conduction and/or liquid conduction.

In the above solutions, the first avoidance portion and the second avoidance portion are configured to avoid the one pair of the longitudinal beams of the vehicle respectively, and the butting structure is arranged between the first avoidance portion and the second avoidance portion, so that, on the one hand, the butting structure can reduce the risk of the battery energy density decrease using the space between the one pair of the longitudinal beams because of reducing the space required for the battery cells due to arrangement of the butting structure, so that the battery has a high volumetric energy density; and on the other hand, the butting structure of the vehicle and the butting structure of the battery can further complete the butting action between the first avoidance portion and the second avoidance portion, and reduce the interference of an external structure on the butting action, so that the butting is safer.

According to some embodiments of the present application, the butting structure comprises an electrical connection portion, the first battery module, the third battery module, and the second battery module are connected to each other in series, and the first battery module and the second battery module are electrically connected to a positive electrode and a negative electrode of the electrical connection portion respectively.

In the above solutions, the first battery module, the third battery module, and the second battery module are arranged to be connected to each other in series, and the first battery module and the second battery module are arranged to be electrically connected to the positive electrode and the negative electrode of the electrical connection portion respectively, so that an electrical connection path among the battery modules is short, thereby saving the costs and occupied space of a conductive material for the electrical connection, and contributing to the cost control and the improvement of the volumetric energy density of the battery.

In a second aspect, some embodiments of the present application further provide a vehicle, comprising a vehicle body and the battery provided in the first aspect. The vehicle body has a longitudinal beam. The battery is connected to the vehicle body, and the longitudinal beam runs through an avoidance portion along a first direction.

The above description merely provides an overview of the technical solutions of the present application. In order to more clearly understand the technical means of the present application, the present application may be implemented based on the contents of the specification, and in order to make the above and other objectives, features, and advantages of the present application more obvious and understandable, detailed description of the present application is listed below.

### DESCRIPTION OF DRAWINGS

To more clearly describe the technical solutions of the embodiments of the present application, the drawings required to be used in the embodiments will be briefly introduced below, and it should be understood that the following drawings only show some embodiments of the present application, and therefore should not be viewed as limiting the scope of the present application. For those of ordinary skills in the art, other relevant drawings may also be obtained based on these drawings without creative work.
FIG. 1 is a schematic diagram of a vehicle according to some embodiments of the present application;
FIG. 2 is a three-dimensional view of a battery according to some embodiments of the present application;
FIG. 3 is a schematic three-dimensional view of a battery and a longitudinal beam according to some embodiments of the present application;
FIG. 4 is a schematic structural diagram of a battery and a longitudinal beam according to some embodiments of the present application;
FIG. 5 is an internal schematic diagram of a battery according to some embodiments of the present application;
FIG. 6 is a schematic diagram of a case and a battery module according to some embodiments of the present application; and
FIG. 7 is a schematic diagram of a battery module according to some embodiments of the present application.

Icons: 100-Battery; 10-Case; 11-First case; 12-Second case; 13-First case portion; 14-Second case portion; 15-Avoidance portion; 150-First avoidance portion; 151-Second avoidance portion; 16-Partition element; 20-Battery module; 20a-First battery module; 20b-Second battery module; 20c-Third battery module; 21-battery cell group; 210-Battery cell; 22-End plate; 23-Bundling element; 24-Protective element; 30-Thermal management component; 31-First thermal management component; 32-Second thermal management component; 33-Third thermal management component; 40-Butting structure; 41-Electrical connection portion; 50-Longitudinal beam; x-First direction; z-Second direction; y-Third direction; 1000-Vehicle; 200-Controller; 300-Motor.

### DETAILED DESCRIPTION

Embodiments of the present application are further described in detail below with reference to the accompanying drawings and embodiments. The following detailed description of the embodiments and the accompanying drawings are used to illustrate the principles of the present application by way of example, but should not be used to limit the scope of the present application, that is, the present application is not limited to the described embodiments.

Unless otherwise defined, all technical and scientific terms used herein have the same meaning as commonly understood by those skilled in the art belonging to the technical field of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, the technical terms such as "first" and "second" are only used to distinguish between different objects, but cannot be understood as indicating or implying relative importance or implicitly indicating the number, particular order, or primary-secondary relationship of the indicated technical features. In the description of the embodiments of the present application, the meaning of "a plurality of" is two or more, unless otherwise explicitly and specifically defined.

Reference herein to an "embodiment" means that a particular feature, structure, or property described with reference to the embodiment may be included in at least one embodiment of the present application. The appearances of the phrase in various places in the specification neither necessarily refer to a same embodiment, nor are independent or alternative embodiments mutually exclusive from other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "plurality" refers to more than two (including two). Similarly, "a plurality of groups" refer to more than two groups (including two groups), and "a plurality of sheets" refer to more than two sheets (including two sheets).

In the description of the embodiments of the present application, orientation or positional relationships indicated by the technical terms "length," "width," "thickness," "upper," "lower," and the like are based on the orientation or positional relationships shown in the drawing, and are only for the convenience of describing the embodiments of the present application and simplifying the description, and do not indicate or imply that the apparatus or element referred to must have a particular orientation, be constructed and operated in a particular orientation, and therefore cannot be construed as a restriction on the embodiments of the present application.

In the description of the embodiments of the present application, unless otherwise explicitly specified and defined, the technical terms "mount," "couple," "connect," "fix", etc., should be understood in a broad sense, for example, a fixed connection, a detachable connection, or an integral connection; or a mechanical connection, or an electrical connection; or a direct connection, an indirect connection through an intermediate medium, an internal communication of two elements, or interaction between two elements. For those of ordinary skill in the art, the specific meanings of the above terms in the embodiments of the present application can be understood according to specific situations.

The battery mentioned in the embodiments of the present application refers to a single physical module including one or more battery cells to provide a higher voltage and capacity. For example, the battery mentioned in the present application may comprise one or more battery cells. The battery cell comprises an electrode assembly and an electrolyte solution, and the electrode assembly is composed of a positive electrode plate, a negative electrode plate, and a separator. The battery cell works mainly relying on movement of metal ions between the positive electrode plate and the negative electrode plate. The positive electrode plate comprises a positive electrode current collector and a positive electrode active material layer. The positive electrode active material layer is coated on a surface of the positive electrode current collector. The positive electrode current collector that is not coated with the positive electrode active material layer protrudes from the positive electrode current collector that is coated with the positive electrode active material layer. The positive electrode current collector that is not coated with the positive electrode active material layer serves as a positive tab. Taking a lithium-ion battery as an example, the material of the positive electrode current collector may be aluminum, and a positive electrode active material may be, e.g., lithium cobalt oxide, lithium iron phosphate, ternary lithium, or lithium manganate. The negative electrode plate comprises a negative electrode current collector and a negative electrode active material layer, a surface of the negative electrode current collector is coated with the negative electrode active material layer, the negative electrode current collector that is not coated with the negative electrode active material layer protrudes from the negative electrode current collector that is coated with the negative electrode active material layer, and the negative electrode current collector that is not coated with the negative electrode active material layer serves as a negative tab. Material of the negative electrode current collector may be copper, and the negative electrode active material may be, e.g., carbon or silicon. Material of the separator may be, e.g., PP (polypropylene) or PE (polyethylene).

The battery further comprises a case. The case comprises a first case and a second case. The first case is connected to the second case to jointly form a closed space, in which the battery cells are arranged to prevent liquid or other foreign matters from affecting the charge or discharge of the battery cells.

In recent years, electric vehicles have developed by leaps and bounds. In the field of electric vehicles, batteries, as the power source of electric vehicles, play an irreplaceable and important role. As a core component of an electric vehicle, a battery has high requirements in terms of energy density.

At present, the battery is arranged at the bottom of the vehicle, below a longitudinal beam. However, the battery case is square, and the entire battery is located below the longitudinal beam. Given that when the battery is used in the vehicle, ground clearance of the vehicle cannot be too low, and height dimension of the shell cannot be too large. Therefore, a small number of battery cells are accommodated in the shell, thereby affecting the volumetric energy density of the battery.

In view of this, in order to reduce the impact on the ground clearance of the vehicle after the battery is used in the vehicle, and to enable the battery to have a high volumetric energy density, some embodiments of the present application design a battery, comprising a case and a plurality of battery cells. The case has an avoidance portion for avoiding a longitudinal beam of a vehicle, wherein the avoidance portion runs throughout the case along a first direction, and an opening of the avoidance portion faces a second direction. The plurality of the battery cells are arranged inside the case, wherein a projection of at least one of the battery cells along a third direction overlaps with a projection of the avoidance portion along the third direction. The first direction, the second direction, and the first direction are perpendicular pairwise, and the third direction is a width direction of the avoidance portion.

In the above solutions, the avoidance portion capable of avoiding the longitudinal beam of the vehicle is arranged on the case, so that the case can reasonably utilize the space of the longitudinal beam in the second direction z, and improve the space utilization of the battery in the second direction z. When the battery is used in the vehicle, the battery and the longitudinal beam jointly occupy partial space in the second direction z, so that the vehicle has a compact structure, thus having the advantage of improving the ground clearance or cargo capacity.

Position layout of the plurality of the battery cells is defined in such a way that the projection of the at least one of the battery cells in the third direction overlaps with the projection of the avoidance portion in the third direction, so that the at least one of the battery cells can reasonably utilize lateral space of the longitudinal beam, and so that more battery cells can be installed on the vehicle, thereby improving, for the vehicle, the energy density of the battery, and improving the range of the vehicle.

The battery disclosed in an embodiment of the present application may be used in, but not limited to, a vehicle, and may also be used in an additional electrical apparatus with a longitudinal beam, wherein the battery can avoid the longitudinal beam of the additional electrical apparatus.

The battery disclosed in an embodiment of the present application can be used in, but not limited to, an electrical apparatus that has a longitudinal beam and can enable the battery to avoid the longitudinal beam, such as a vehicle, a ship, or an aircraft. The battery disclosed in the present application may be used to form a power source system of the electrical apparatus.

An embodiment of the present application provides an electrical apparatus using a battery as a power source. The electrical apparatus may be, but is not limited to, a mobile phone, a tablet, a laptop, an electric toy, an electric tool, an electric bicycle, an electric motorcycle, an electric vehicle, a ship, a heavy truck, a bus, a spacecraft, etc. The electric toy may include a stationary or mobile electric toy, such as a game machine, an electric car toy, an electric ship toy, or an electric airplane toy, and the spacecraft may include an airplane, a rocket, an aerospace plane, a spaceship, and the like.

For ease of description, the following embodiments are illustrated when the electrical apparatus in an embodiment of the present application is, for example, a vehicle.

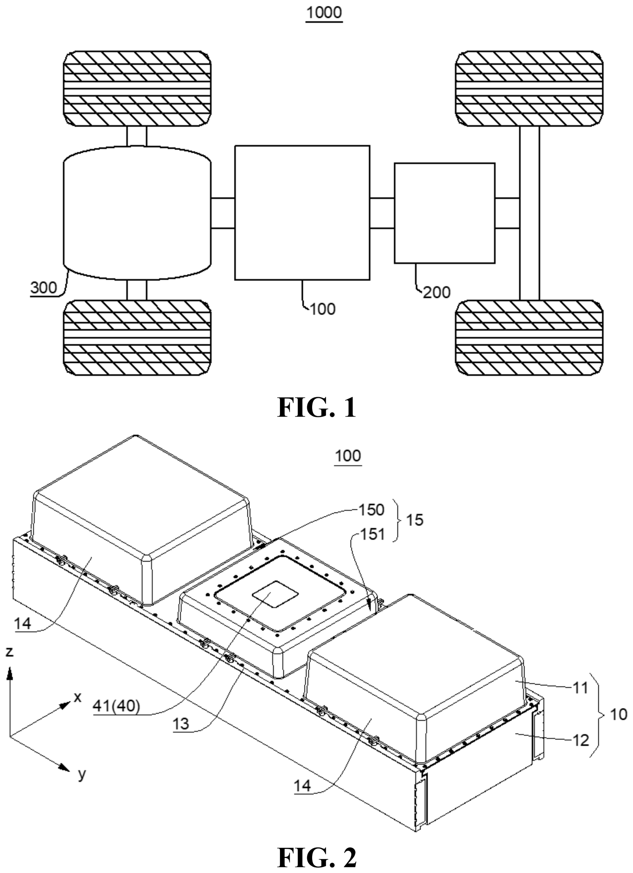

Referring to FIG. 1, FIG. 1 is a schematic diagram of a vehicle according to some embodiments of the present application. The vehicle 1000 may be a fuel vehicle, a gas vehicle, or a new-energy vehicle. The new-energy vehicle may be, e.g., an all-electric vehicle, a hybrid electric vehicle, or an extended range electric vehicle. Type of the vehicle 1000 may be, e.g., a car, an off-road vehicle, a heavy truck, or a bus. A battery 100 is provided inside the vehicle 1000. The battery 100 may be arranged at the bottom or head or tail of the vehicle 1000. The battery 100 may be used for supplying power to the vehicle 1000. For example, the battery 100 may be used as an operating power source of the vehicle 1000, which is used for a circuit system of the vehicle 1000, for example, for operation power requirements of the vehicle 1000 during starting, navigation, and running.

The vehicle 1000 may further include a controller 200 and a motor 300. The controller 200 is configured to control the battery 100 to supply power to the motor 300, for example, serve to satisfy operating power demand when the vehicle 1000 is starting, navigating, and running.

In some embodiments of the present application, the battery 100 not only can serve as an operating power source of the vehicle 1000, but also can serve as a driving power source of the vehicle 1000, to provide driving power for the vehicle 1000 in place of or partially in place of fuel or natural gas.

In some embodiments of the present application, a vehicle body of the vehicle has a longitudinal beam 50, and the battery 100 can be arranged in the vehicle body avoiding the longitudinal beam 50.

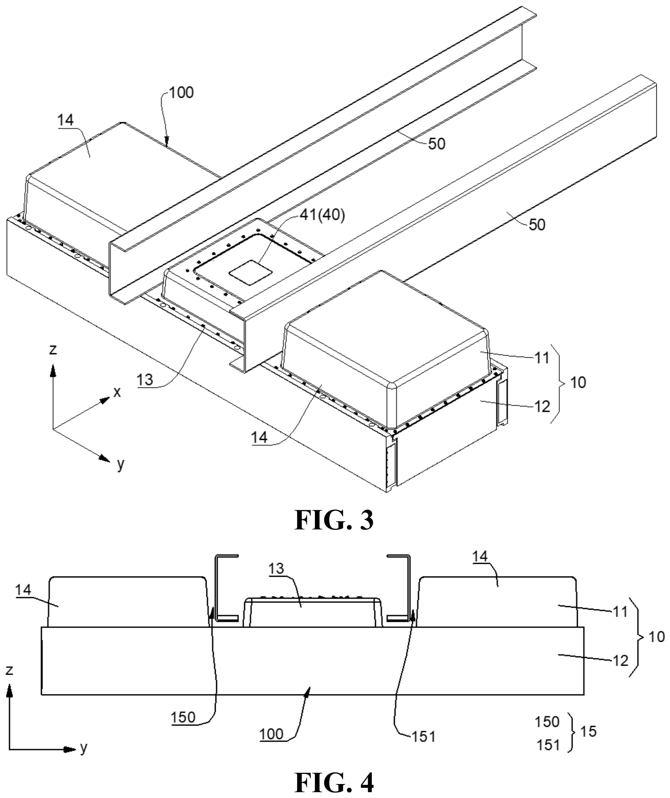

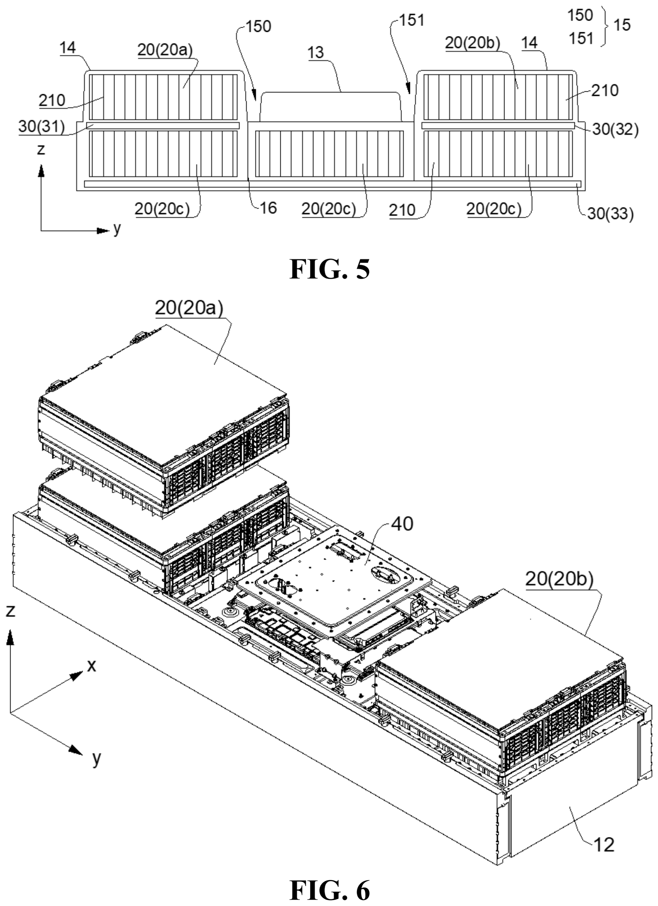

According to some embodiments of the present application, the present application provides a battery 100. Referring to FIGS. 2-5, FIG. 2 is a three-dimensional view of a battery 100 according to some embodiments of the present application, FIG. 3 is a schematic three-dimensional view of a battery 100 and a longitudinal beam 50 according to some embodiments of the present application, FIG. 4 is a schematic structural diagram of a battery 100 and a longitudinal beam 50 according to some embodiments of the present application, and FIG. 5 is an internal schematic diagram of a battery 100 according to some embodiments of the present application.

The battery 100 comprises a case 10 and a plurality of battery cells 210. The case 10 has an avoidance portion 15 for avoiding a longitudinal beam 50 of a vehicle, wherein the avoidance portion 15 runs throughout the case 10 along a first direction x, and an opening of the avoidance portion 15 faces a second direction z. At least some of the plurality of the battery cells 210 are arranged inside the case 10, and a projection of at least one of the battery cells 210 along a third direction y overlaps with a projection of the avoidance portion 15 along the third direction. The first direction x, the second direction z, and the first direction x are perpendicular pairwise, and the third direction y is a width direction of the avoidance portion 15.

There is a space for accommodating the battery cells 210 inside the case 10. In some embodiments, the case 10 may comprise a first case 11 and a second case 12. The first case 11 and the second case 12 are connected to each other to jointly define a closed space for accommodating the battery cells 210. Optionally, each of the first case 11 and the second case 12 may be a hollow structure with one open side, and the open side of the first case 11 and the open side of the second case 12 match each other, so that the first case 11 and the second case 12 jointly define a closed space. Optionally, the first case 11 may be a hollow structure with one open end, the second case 12 may be a platy structure, and the second case 12 is arranged on the open side of the first case 11, so that the first case 11 and the second case 12 jointly define a closed space. Optionally, the second case 12 may be a hollow structure with one end open, and the first case 11 may be a platy structure. The first case 11 is arranged on the open side of the second case 12, so that the first case 11 and the second case 12 jointly define the closed space. For example, as shown in FIG. 2, the case 10 has a long strip structure, a length direction of the case 10 may be parallel to the third direction y, a height direction of the case 10 may be parallel to the second direction z, and a width direction of the case 10 may be parallel to the first direction x. For example, as shown in FIG. 2, the case 10 comprises the first case 11 and the second case 12. The first case 11 is an upper case 10, and the second case 12 is a lower case 10. Optionally, one or more of battery cells 210 may be arranged in the closed space.

As an example, the battery 100 is provided with a plurality of the battery cells 210, and there may be series connection, or parallel connection, or parallel-series connection among the plurality of the battery cells 210. The parallel-series connection means that there are both series connection and parallel connection among the plurality of the battery cells 210. The plurality of the battery cells 210 may be connected directly by series connection or parallel connection or parallel-series connection, and then the entirety formed by the plurality of the battery cells 210 is accommodated in the closed space. Of course, the battery 100 may also be an entirety formed by first series connection or parallel connection or parallel-series connection of the plurality of the battery cells 210 to form battery modules 20, and then by series connection or parallel connection or parallel-series connection of a plurality of the battery modules 20, and is accommodated in the closed space.

The longitudinal beam 50 is a structural member of the vehicle. In some embodiments, the longitudinal beam 50 may be a frame structure cross-connecting front and rear axles of the vehicle body, commonly known as a crossbeam, and is a base body of the vehicle body. Functions of the longitudinal beam 50 may include supporting and connecting various assemblies of the vehicle body, keeping each assembly in a relatively correct position, and bearing various loads inside and outside the vehicle body.

The avoidance portion 15 comprises a recessed structure formed in the case 10. The avoidance portion 15 may comprise an avoidance groove formed in the case 10. In some embodiments, the projection of the avoidance portion 15 may be a projection of a wall portion forming the avoidance portion 15 (such as the avoidance groove). In some embodiments, as shown in FIG. 2, the avoidance portion 15 is formed in the first case 11. The avoidance portion 15 comprises a recessed structure formed in the first case 11. The function of the avoidance portion 15 includes being able to avoid the longitudinal beam 50 on the vehicle when the battery 100 is used in the vehicle, so that the longitudinal beam 50 runs through the avoidance portion 15. The first direction x may be parallel to a length direction of the longitudinal beam 50, and the second direction z may be parallel to a height direction of the longitudinal beam 50. For example, in the length direction of the longitudinal beam 50, the avoidance portion 15 runs throughout the case 10, so that the longitudinal beam 50 can run through the avoidance groove. Along the height direction of the longitudinal beam 50, the longitudinal beam 50 can insert into the avoidance portion 15, so that the longitudinal beam 50 can be located in the avoidance groove.

In some embodiments, referring to FIGS. 3 and 4, the number of longitudinal beams 50 is two, and the two longitudinal beams 50 are arranged oppositely. The avoidance portion 15 may comprise a first avoidance portion 150 and a second avoidance portion 151, and the first avoidance portion 150 and the second avoidance portion 151 avoid the two longitudinal beams 50 respectively. A portion of the battery 100 can protrude from and be located between the two longitudinal beams 50. The protruding site of the battery 100 may include the battery cell 210 or other electrical components or structural members, such as the butting structure 40. The butting structure 40 may include, e.g., an electrical connecting element or a water-cooling connecting element. A portion of the battery 100 can also protrude from outer sides of the two longitudinal beams 50. The protruding portion may include the battery cell 210 or other electrical components or structural members, such as an electrical connecting element or a water-cooling connecting element.

"The projection of at least one of the battery cells 210 along the third direction y overlaps with the projection of the avoidance portion 15 along the third direction," which may be understood as that along the third direction y, at least one of the battery cells 210 is provided on at least one side of the avoidance portion 15, or may be understood as that when the battery 100 is used in the vehicle and the longitudinal beam 50 runs through the avoidance portion 15, there is at least one of the battery cells 210 laterally on the longitudinal beam 50.

In the above solutions, the avoidance portion 15 capable of avoiding the longitudinal beam 50 of the vehicle is arranged on the case 10, so that the case 10 can reasonably utilize the space of the longitudinal beam 50 in the second direction z, and improve the space utilization of the battery 100 in the second direction z. When the battery 100 is used in the vehicle, the battery 100 and the longitudinal beam 50 jointly occupy partial space in the second direction z, so that the vehicle has a compact structure, thus having the advantage of improving the ground clearance or cargo capacity.

Position layout of the plurality of the battery cells 210 is defined in such a way that the projection of the at least one of the battery cells 210 in the third direction y overlaps with the projection of the avoidance portion 15 in the third direction y, so that the at least one of the battery cells 210 can reasonably utilize lateral space of the longitudinal beam 50, and so that more battery cells 210 can be installed on the vehicle, thereby improving, for the vehicle, the energy density of the battery 100, and improving the range of the vehicle.

According to some embodiments of the present application, referring to FIG. 5, at least two layers of the battery cells 210 are stacked in the case 10 along the second direction z. Among the at least two layers of the battery cells 210, a projection of at least one of the battery cells 210 in at least one layer of the battery cells 210 along the third direction y and the projection of the avoidance portion 15 along the third direction y overlap with each other, and a projection of at least one of the battery cells 210 in at least one another layer along the third direction y is completely misaligned with the projection of the avoidance portion 15 along the third direction y.

In some embodiments, among the plurality of the battery cells 210 of the battery 100, at least some of the battery cells 210 are stacked along the second direction z to form at least two layers of the battery cells 210. Each layer of the battery cells 210 includes at least one of the battery cells 210. As an example, each layer of the battery cells 210 may include one, two, three, or more battery cells 210.

Among the at least two layers of the battery cells 210, the projection of at least one layer of the battery cells 210 along the third direction y overlaps with the projection of the avoidance portion 15 along the third direction y, which may also be understood as that when the battery 100 is viewed along a sight line in the third direction y, at least one layer of the battery cells 210 and the avoidance portion 15 overlap with each other. Among the at least two layers of the battery cells 210, the projection of at least one another layer of the battery cells 210 along the third direction y is completely misaligned with the projection of the avoidance portion 15 along the third direction y, which may also be understood as that when the battery 100 is viewed along a sight line in the third direction y, the at least one another layer of the battery cells 210 does not overlap with the avoidance portion 15.

As an example, referring to FIG. 5, at least two layers of the battery cells 210 are stacked in the case 10 along the second direction z. One of the battery cells 210 located in an upper layer is located laterally on the avoidance portion 15 in the third direction y. One of the battery cells 210 located in a lower layer is located below the avoidance portion 15, and a projection of the battery cell 210 located in the lower layer in the third direction y is completely misaligned with the projection of the avoidance portion 15 in the third direction y.

In the above solutions, the battery cells 210 provided in the case 10 comprise at least two layers of stacked battery cells 210. A part of the at least two layers of the battery cells 210 are located laterally on the avoidance portion 15 in the third direction y, to reasonably utilize the lateral space of the longitudinal beam 50 when the battery 100 is used in the vehicle; and the other part of the at least two layers of the battery cells 210 and the avoidance portion 15 may be misaligned with each other in the second direction z, to reasonably utilize the space of the longitudinal beam 50 in the second direction z when the battery 100 is used in the vehicle, so that more battery cells 210 can be installed on the vehicle, thereby improving, for the vehicle, the energy density of the battery 100, and improving the range of the vehicle.

According to some embodiments of the present application, the battery 100 further comprises thermal management components 30 for regulating temperatures of the battery cells 210. A plurality of the battery cells 210 located on one side of the avoidance portion 15 along the third direction y and located on a same layer are connected to a given one of the thermal management components 30.

The thermal management components 30 are components capable of cooling or heating the battery cells 210. In some embodiments, a heat transfer medium can be accommodated inside the thermal management components 30 to regulate the temperatures of the battery cells 210, so that the battery 100 is within an appropriate temperature range to ensure high reliability. The heat transfer medium here may be a fluid (liquid) or a gas, and the regulating the temperatures refers to heating or cooling the plurality of the battery cells 210. In some other embodiments, for example, when the thermal management components 30 can only heat the battery cells 210, the thermal management components 30 may be electric heating structures that generate heat, when being powdered on, to heat the battery cells 210.

In some embodiments, the thermal management components 30 may be water-cooling plates. The battery cells 210 can be cooled by introducing water at a lower temperature, and the battery cells 210 can be heated by introducing water at a higher temperature.

"The plurality of the battery cells 210 located on one side of the avoidance portion 15 along the third direction y and located on the same layer are connected to a given one of the thermal management components 30," which may be understood as that all of the battery cells 210 located on the same layer on the one side of the avoidance portion 15 in the third direction y are connected to one of the thermal management components 30, and the one thermal management component 30 can cool or heat all of the battery cells 210 on the same layer.

In some embodiments, one of the thermal management components 30 is provided at the bottom of the plurality of the battery cells 210 located on the same layer on the one side of the avoidance portion 15 along the third direction y. The one thermal management component 30 cools or heats the battery cells 210 above it.

In the above solutions, the thermal management components 30 are provided, thereby regulating the temperatures of the battery cells 210, reducing the risk of thermal runaway of the battery cells 210, and making the battery 100 highly reliable. The plurality of the battery cells 210 located on the one side of the avoidance portion 15 along the third direction y and located on the same layer are acted upon by a given one of the thermal management components 30, which can, compared with the battery cells 210 being acted upon by different thermal management components 30, not only save the space occupied by the thermal management components 30 and increase the volumetric energy density of the battery 100, but also improve the consistency of temperature regulation, so that the temperatures among the battery cells 210 tend to be consistent, so as to have high reliability.

According to some embodiments of the present application, referring to FIG. 5, a plurality of the battery cells 210 are provided on either side of the avoidance portion 15 along the third direction y. The battery cells 210 located on different sides of the avoidance portion 15 along the third direction y are connected to different thermal management components 30 respectively.

In some embodiments, the battery cells 210 located on both sides of the avoidance portion 15 in the third direction y are acted upon by different thermal management components 30, to regulate the temperatures respectively. As an example, in FIG. 5, a first battery module 20a is located on a left side of the avoidance portion 15, and a second battery module 20b is located on a right side of the avoidance portion 15. A first thermal management component 31 is located on the left side of the avoidance portion 15 and below the first battery module 20a, and can heat or cool the plurality of the battery cells 210 of the first battery module 20a. A second thermal management component 32 is located on the right side of the avoidance portion 15 and below the second battery module 20b, and can heat or cool the plurality of the battery cells 210 of the second battery module 20b. The first thermal management component 31 and the second thermal management component 32 are two mutually independent thermal management components 30 and are not a given one of the thermal management components 30. In some embodiments, internal channels of the first thermal management component 31 and the second thermal management component 32 may be connected to each other in series or in parallel.

In the above solutions, on the one hand, the plurality of the battery cells 210 are arranged on both sides of the avoidance portion 15 along the third direction y, thereby reasonably utilizing the space on both sides of the longitudinal beam 50 when the battery 100 is used in the vehicle, increasing the energy density of the battery 100, and increasing the range of the vehicle. On the other hand, the temperatures of the battery cells 210 on both sides of the avoidance portion 15 along the third direction y are regulated through different thermal management components 30 respectively, thereby instantly regulating the temperatures of the battery cells 210 at different sites, effectively improving the thermal management ability of the battery 100, reducing the risk of thermal runaway of the battery 100, and making the battery 100 highly reliable.

According to some embodiments of the present application, referring to FIG. 5, at least one of the battery cells 210 is provided on one side of the avoidance portion 15 facing the inside of the battery 100 along the second direction z.

In some embodiments, the second direction z may be a height direction of the battery 100, the avoidance portion 15 may be formed on the upper case 10 of the case 10, and at least one of the battery cells 210 may be provided below the avoidance portion 15. When the battery 100 is used in the vehicle, the battery cells 210 located below the avoidance portion 15 are located below the longitudinal beam 50.

In the above solutions, the at least one of the battery cells 210 is provided on one side of the avoidance portion 15 along the second direction z and inside the case 10, thereby reasonably utilizing the space below the longitudinal beam 50 when the battery 100 is used in the vehicle, so that the vehicle can be provided with more battery cells 210 to improve the range of the vehicle.

According to some embodiments of the present application, the battery cells 210 located on one side of the avoidance portion 15 along the second direction z and the battery cells 210 located on one side of the avoidance portion 15 along the third direction y are connected to different thermal management components 30.

In some embodiments, in FIG. 5, "the battery cells 210 located on one side of the avoidance portion 15 along the second direction z" may be understood as the battery cells 210 located below the avoidance portion 15. "The battery cells 210 located on one side of the avoidance portion 15 along the third direction y" may be understood as the battery cells 210 located on the left side and/or the right side of the avoidance portion 15. As an example, in FIG. 5, the first battery module 20a is located on the left side of the avoidance portion 15, the second battery module 20b is located on the right side of the avoidance portion 15, and a third battery module 20c is located below the avoidance portion 15. The first thermal management component 31 is located on the left side of the avoidance portion 15 and below the first battery module 20a, and can heat or cool the plurality of the battery cells 210 of the first battery module 20a. The second thermal management component 32 is located on the right side of the avoidance portion 15 and below the second battery module 20b, and can heat or cool the plurality of the battery cells 210 of the second battery module 20b. A third thermal management component 33 is located below the avoidance portion 15 and below the third battery module 20c, and can heat or cool the plurality of the battery cells 210 of the third battery module 20c. In some embodiments, the number of third battery modules 20c may be a plural number, the plurality of third battery modules 20c may be arranged along the third direction y, and the first battery module 20a and the second battery module 20b may be located above the third battery module 20c at an end portion. The plurality of third battery modules 20c may be located above a given one of the third thermal management components 33, or may be located above the plurality of the third thermal management components 33.

The first thermal management component 31, the second thermal management component 32, and the third thermal management component 33 are three mutually independent thermal management components 30, and are not a given one of the thermal management components 30. In some embodiments, internal channels of the first thermal management component 31, the second thermal management component 32, and the third thermal management components 33 may be connected to each other in series or in parallel.

In the above solutions, different thermal management components 30 are used to respectively regulate the temperatures of the battery cells 210 located laterally on the avoidance portion 15 along the third direction y and located laterally on the avoidance portion 15 along the second direction z, thereby instantly regulating the temperatures of the battery cells 210 at different sites, effectively improving the thermal management ability of the battery 100, reducing the risk of thermal runaway of the battery 100, and making the battery 100 highly reliable.

According to some embodiments of the present application, referring to FIG. 5, the plurality of the battery cells 210 located on a same side of the avoidance portion 15 along the second direction z are connected to a given one of the thermal management components 30.

In some embodiments, the plurality of the battery cells 210 are arranged along the second direction z on the one side of the avoidance portion 15 facing the inside of the battery 100, and the plurality of the battery cells 210 may be arranged along the third direction y.

One of the thermal management components 30 is provided along the second direction z on the one side of the avoidance portion 15 facing the inside of the battery 100. The one thermal management component 30 may be located on one side of the "plurality of the battery cells 210" facing away from the avoidance portion 15, to cool or heat the "plurality of the battery cells 210".

In the above solutions, the plurality of the battery cells 210 located on the same side of the avoidance portion 15 along the second direction z are acted upon by a given one of the thermal management components 30, thereby improving the consistency of temperature regulation of the battery cells 210, so that the temperatures among the plurality of the battery cells 210 located on the same side of the avoidance portion 15 along the second direction z tend to be consistent, thereby effectively reducing the risk of thermal runaway of the plurality of the battery cells 210, and making the battery 100 highly reliable.

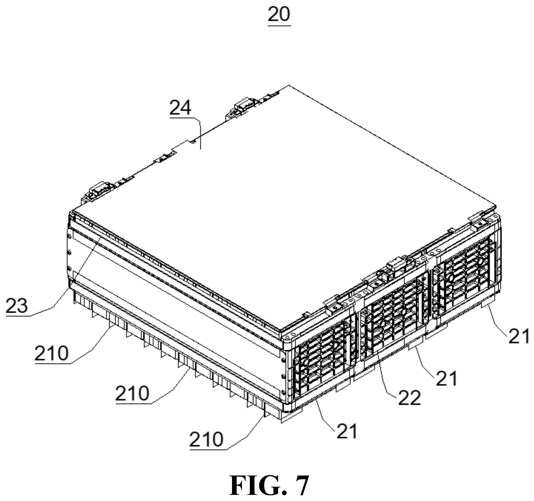

According to some embodiments of the present application, referring to FIGS. 5-7, FIG. 6 is a schematic diagram of the case 10 and the battery module 20 according to some embodiments of the present application, and FIG. 7 is a schematic diagram of the battery module 20 according to some embodiments of the present application.

The battery 100 further comprises the thermal management components 30 for regulating the temperatures of the battery cells 210. The battery 100 comprises the battery module 20, and the battery module 20 comprises the plurality of the battery cells 210. The battery module 20 comprises a first battery module 20a and a second battery module 20b respectively located on both sides of the avoidance portion 15 along the third direction y, and further comprises at least one third battery module 20c located on one side of the avoidance portion 15 facing the inside of the battery 100 along the second direction z, and the first battery module 20a and the second battery module 20b are located on a same side of the third battery module 20c along the second direction z. The first battery module 20a, the second battery module 20b, and the third battery module 20c are connected to different thermal management components 30 respectively.

The thermal management components 30 are components capable of cooling or heating the battery cells 210. In some embodiments, a heat transfer medium can be accommodated inside the thermal management components 30 to regulate the temperatures of the battery cells 210, so that the battery 100 is within an appropriate temperature range to ensure high reliability. The heat transfer medium here may be a fluid (liquid) or a gas, and the regulating the temperatures refers to heating or cooling the plurality of the battery cells 210. In some other embodiments, for example, when the thermal management components 30 can only heat the battery cells 210, the thermal management components 30 may be electric heating structures that generate heat, when being powdered on, to heat the battery cells 210. In some embodiments, the thermal management components 30 may be water-cooling plates. The battery cells 210 can be cooled by introducing water at a lower temperature, and the battery cells 210 can be heated by introducing water at a higher temperature.

The battery module 20 comprises a battery cell group 21, and the battery cell group 21 comprises a plurality of stacked battery cells 210. In some embodiments, the battery module 20 may comprise a plurality of battery cell groups 21, and the plurality of battery cell groups 21 are arranged in an array.

In some embodiments, the battery module 20 may further comprise end plates 22. The end plates 22 may be provided at both ends of one of the battery cell groups 21 or the plurality of battery cell groups 21. Two of the end plates 22 may be tightened through side plates to fasten the battery cell group 21 or the plurality of battery cell groups 21.

The battery 100 comprises a first battery module 20a, a second battery module 20b, and a third battery module 20c.

Referring to FIGS. 5 and 6, the first battery module 20a and the second battery module 20b are respectively arranged on either side of the avoidance portion 15 along the third direction y (which can be seen as left and right sides of the avoidance portion 15 in FIG. 5). The first battery module 20a may be located on the left side of the avoidance portion 15, and the second battery module 20b may be located on the right side of the avoidance portion 15. The third battery module 20c is arranged on one side of the avoidance portion 15 facing the inside of the battery 100 along the second direction z (which can be seen as below the avoidance portion 15 in FIG. 5).

In some embodiments, the number of the first battery modules 20a may be one, two, three, or more. The number of the second battery modules 20b may be one, two, three, or more. The number of the third battery modules 20c may be one, two, three, or more.

In FIG. 6, the number of the first battery modules 20a is one, the number of the second battery modules 20b is one, and the number of the third battery modules 20c may be three. The three third battery modules 20c are arranged along the third direction y. The first battery module 20a is arranged above one of the third battery modules 20c at one end portion thereof, and the second battery module 20b is arranged above one of the third battery modules 20c at one additional end portion.

"The first battery module 20a, the second battery module 20b, and the third battery module 20c are connected to different thermal management components 30 respectively," which may be understood as that the first battery module 20a, the second battery module 20b, and the third battery module 20c each have a corresponding thermal management component 30. For example, the thermal management component 30 comprises a first thermal management component 31, a second thermal management component 32, and a third thermal management component 33. The first thermal management component 31 is arranged below the first battery module 20a, the first thermal management component 31 may be connected to a lower surface of the first battery module 20a, and a connection relationship between the two includes, but is not limited to, bonding, direct placement, snap fit, or welding, etc. The second thermal management component 32 is arranged below the second battery module 20b, the second thermal management component 32 may be connected to a lower surface of the second battery module 20b, and a connection relationship between the two includes, but is not limited to, bonding, direct placement, snap fit, or welding, etc. The third thermal management component 33 is arranged below the third battery module 20c, the third thermal management component 33 may be connected to a lower surface of the third battery module 20c, and a connection relationship between the two includes, but is not limited to, bonding, direct placement, snap fit, or welding, etc.

Among the above solutions, a solution of first constituting battery modules 20 from the plurality of the battery cells 210 and then assembling the battery modules into the case 10 to form a battery 100 can improve the assembly efficiency of the battery 100. Based on the avoidance portion 15, the first battery module 20a, the second battery module 20b, and the third battery module 20c are arranged inside the case 10, thereby allowing the battery cells 210 to reasonably utilize the space inside the case 10, making the battery 100 have a high volumetric energy density, reasonably utilizing the lateral space of and the space below the longitudinal beam 50 when the battery 100 is used in the vehicle, and improving the range of the vehicle. The temperatures of the first battery module 20a, the second battery module 20b, and the third battery module 20c are regulated through different thermal management components 30, thereby instantly regulating the temperatures of the first battery module 20a, the second battery module 20b, and the third battery module 20c, reducing the risk of thermal runaway of the battery 100, and making the battery 100 highly reliable.

According to some embodiments of the present application, referring to FIGS. 5 and 6, a plurality of third battery modules 20c are provided on one side of the avoidance portion 15 facing the inside of the battery 100 along the second direction z, and the plurality of third battery modules 20c are connected to a given one of the thermal management components 30.

In some embodiments, the plurality of third battery modules 20c may be provided below the avoidance portion 15. As an example, in FIG. 5, three third battery modules 20c may be arranged in an array along the third direction y.

In some other embodiments, two, three, or more third battery modules 20c may be provided below the avoidance portion 15. The two, three, or more third battery modules 20c may be arranged in any direction, for example, along the second direction z.

In the above solutions, the plurality of third battery modules 20c are acted upon by a given one of the thermal management components 30, thereby improving the consistency of temperature regulation of the battery cells 210, so that the temperatures among the plurality of the battery cells 210 on the avoidance portion 15 facing the inside of the battery 100 along the second direction z tend to be consistent, thereby effectively reducing the risk of thermal runaway of the plurality of the battery cells 210, and making the battery 100 highly reliable.

According to some embodiments of the present application, the first battery module 20a, the second battery module 20b, and the third battery module 20c each comprise a plurality of the battery cells 210 arranged in a same manner.

"The first battery module 20a, the second battery module 20b, and the third battery module 20c each comprise the plurality of the battery cells 210 arranged in the same manner," which may be understood as that the first battery module 20a, the second battery module 20b, and the third battery module 20c may be a given one of the battery modules 20, may have different names, but have the same number and arrangement of the battery cells 210 constituting them.

As an example, referring to FIG. 7, FIG. 7 may represent the first battery module 20a, the second battery module 20b, or the third battery module 20c.

As an example, the first battery module 20a, the second battery module 20b, or the third battery module 20c may comprise three battery cell groups 21, and each of the battery cell groups 21 may comprise twelve battery cells 210. In each of the battery cell groups 21, the twelve battery cells 210 are stacked along a thickness direction of the battery cells 210. In the battery modules 20, the three battery cell groups 21 are arranged along a length direction of the battery cells 210.

In the above solutions, the battery cells 210 in the first battery module 20a, the second battery module 20b, and the third battery module 20c are arranged in the same manner, that is, the first battery module 20a, the second battery module 20b, and the third battery module 20c may have a same structure of the battery modules 20, so that the assembly of the battery modules 20 in the case 10 is less difficult and highly efficient.

According to some embodiments of the present application, referring to FIG. 7, each of the battery modules 20 comprises a plurality of battery cell groups 21, the plurality of battery cell groups 21 are arranged side by side along the length direction of the battery cells 210, and each of the battery cell groups 21 comprises battery cells 210 stacked along the thickness direction of the battery cells 210. Each of the battery modules 20 further comprises an end plate 22, the end plate 22 is located on one side of the plurality of battery cell groups 21 along the thickness direction of the battery cells 210, and a projection of the end plate 22 and projections of the plurality of battery cell groups 21 overlap with each other along the thickness direction of the battery cells 210.

Each of the battery cell groups 21 comprises a plurality of the battery cells 210. In the battery cell group 21, the plurality of the battery cells 210 are stacked along the thickness direction of the battery cells 210. As an example, in FIG. 7, each of the battery cell groups 21 comprises twelve battery cells 210.

The battery module 20 comprises a plurality of the battery cell groups 21, and the plurality of battery cell groups 21 may be arranged along the length direction of the battery cells 210. Dimension of the battery cell 210 in the length direction thereof is greater than its dimension in the thickness direction thereof, that is, length of the battery cell 210 is greater than thickness of the battery cell 210.

The battery module 20 further comprises the end plate 22. Along the thickness direction of the battery cells 210, the end plate 22 is provided at either end of each of the plurality of battery cell groups 21, and the end plate 22 is connected to the plurality of the battery cells 210 at an end portion. In some embodiments, an area of the end plate 22 facing a surface of the battery cells 210 corresponds to an area of the plurality of the battery cells 210 at an end portion facing the end plate 22, so that the end plate 22 can cover each of the battery cells 210 at the end portion. Material of the end plate 22 includes, but is not limited to, aluminum, an aluminum alloy, plastic, etc.

In some embodiments, the battery module 20 may further comprise a connecting element that connects the end plates 22 at both ends to fasten the plurality of battery cell groups 21. The connecting element includes, but is not limited to, a side plate, a bundling element 23, or an additional component capable of connecting two end plates 22.

In some embodiments, the battery module 20 further comprises a protective element 24, and the protective element 24 may be arranged on an upper surface or a lower surface of the plurality of battery cell groups 21. The protective element 24 may be a protective plate, which includes, but is not limited to, an aluminum plate, an aluminum alloy plate, a stainless steel plate, or a reinforced plastic plate, etc.

In the above solutions, the plurality of battery cell groups 21 are arranged, and the plurality of the battery cells 210 are fastened on a same side through one of the end plates 22 to form one of the battery modules 20, so that the battery module 20 has a high volumetric energy density.

According to some embodiments of the present application, referring to FIG. 2, the case 10 comprises a first case portion 13 and two second case portions 14 respectively located on both sides of the first case portion 13 along the third direction y, and the first case portion 13 and the two second case portions 14 are spaced. The first case portion 13 and the two second case portions 14 jointly form the avoidance portion 15.

In some embodiments, the case 10 comprises the first case portion 13 and the two second case portions 14. In the third direction y, the second case portion 14, the first case portion 13, and the second case portion 14 may be arranged sequentially. The battery cells 210 may be arranged in the first case portion 13, and the battery cells 210 may be arranged in the second case portion 14.

The first case portion 13 and the two second case portions 14 jointly form the avoidance portion 15 capable of avoiding the longitudinal beam 50 of the vehicle. For example, in some embodiments, a portion of the first case portion 13 and a portion of the two second case portions 14 are spaced from each other to form the avoidance groove that runs throughout the battery 100 along the first direction x, is open facing the second direction z, and can accommodate the longitudinal beam 50.

In some embodiments, when the battery 100 is used in the vehicle, the two second case portions 14 may be located on outer sides of a pair of longitudinal beams 50, and the first case portion 13 may be between the one pair of the longitudinal beams 50.

In the above solutions, the first case portion 13 and the second case portions 14 are spaced from each other to form a concave portion capable of avoiding the longitudinal beams 50 of the vehicle. The two second case portions 14 are provided, thereby forming two concave portions on both sides of the first case portion 13, and avoiding the one pair of the longitudinal beams 50 of the vehicle. When the battery 100 is used in the vehicle, the battery 100 and the longitudinal beams 50 jointly occupy partial space in the second direction, so that the vehicle has a compact structure, thus having the advantage of improving the ground clearance or cargo capacity.

According to some embodiments of the present application, referring to FIGS. 2 and 4, same ends of the two second case portions 14 protrude from the first case portion 13 along the second direction z to form the avoidance portion 15 between an end wall of the first case portion 13 perpendicular to the second direction z and side walls of the two second case portions 14 facing the first case portion 13.

In some embodiments, the second direction z may be a height direction, bottom surfaces of the first case portion 13 and the second case portions 14 are coplanar, and a top surface of the first case portion 13 is lower than a top surface of the second case portions 14. When the battery 100 is used in the vehicle, top ends of the two second case portions 14 can exceed bottom surfaces of the longitudinal beams 50, so that the battery cells 210 located inside the second case portions 14 can utilize the lateral space of the longitudinal beams 50. A top end of the first case portion 13 may not exceed the bottom surfaces of the longitudinal beams 50, or may exceed the bottom surfaces of the longitudinal beams 50 and be located between the two longitudinal beams 50. In some embodiments, the top end of the first case portion 13 may exceed the bottom surfaces of the longitudinal beams 50 and be located between the two longitudinal beams 50, wherein the inside of the portion of the first case portion 13 that exceeds the longitudinal beams 50 can accommodate the battery cells 210 or other components, and accommodate the butting structure 40.

In the above solutions, the second case portions 14 are arranged to protrude from the first case portion 13, so that the battery 100 can be provided with more battery cells 210 using the space on both sides of the longitudinal beams 50, thereby improving the energy density of the battery 100, or transferring the battery cells 210 that originally need to be arranged below the longitudinal beams 50 to both sides of the longitudinal beams 50, and increasing the ground clearance of the vehicle.

According to some embodiments of the present application, the number of layers of the battery cells 210 provided in the first case portion 13 is smaller than the number of layers of the battery cells 210 provided in the second case portions 14.

In some embodiments, the number of layers of the battery cells 210 in the second case portions 14 may be greater than the number of layers of the battery cells 210 in the first case portion 13. For example, referring to FIG. 5, there is one layer of the battery cells 210 in the first case portion 13. There are two layers of the battery cells 210 in the second case portions 14.

In the above solutions, a larger number of layers of the battery cells 210 are arranged in the second case 12, thereby reasonably utilizing the space on both sides of the longitudinal beams 50 to provide more battery cells 210, and increasing the volumetric energy density of the battery 100.

According to some embodiments of the present application, the battery 100 further comprises a partition element 16, and the partition element 16 is located at a boundary between the first case portion 13 and the second case portions 14.

The partition element 16 is a structural member provided inside the case 10 and located at the boundary between the first case portion 13 and the second case portions 14. The partition element 16 may be a supporting member, and both ends of the partition element 16 in the second direction z may be connected to a wall portion of the case 10 respectively, to improve the structural stability of the case 10. In some embodiments, one end of the partition element 16 in the second direction z may be connected to the wall portion of the case 10, and the other end may be connected to the thermal management component 30.

The partition element 16 may be a spacer that can separate the space inside the case 10 in the third direction y to separate the battery cells 210 in the case 10.

In some embodiments, the partition element 16 may be a platy structure, and material of the partition element 16 may include, but is not limited to, aluminum, an aluminum alloy, plastic, etc.

In the above solutions, the partition element 16 is arranged at the boundary between the first case portion 13 and the second case portions 14, which can, on the one hand, separate the battery cells 210 located in the first case portion 13 from the battery cells 210 located in the second case portions 14, and reduce the risk of thermal runaway; and on the other hand, improve the structural strength of the case 10, and reduce the risk of bending along the boundary between the first case portion 13 and the second case portions 14 when the battery 100 is impacted, so that the battery 100 is highly reliable.

According to some embodiments of the present application, the avoidance portion 15 comprises a first avoidance portion 150 and a second avoidance portion 151 spaced along the third direction y, the battery 100 further comprises a butting structure 40, the butting structure 40 is located between the first avoidance portion 150 and the second avoidance portions 151, and the butting structure 40 is used for butting with the vehicle to achieve current conduction and/or liquid conduction.

"The avoidance portion 15 comprises a first avoidance portion 150 and a second avoidance portion 151 spaced along the third direction y," which may be understood as that the first avoidance portion 150 can avoid one longitudinal beam 50 among the one pair of the longitudinal beams 50 in the vehicle, and the second avoidance portion 151 can avoid the other longitudinal beam 50.

In some embodiments, the battery 100 has a site protruding between the two longitudinal beams 50 and two portions protruding from the outer sides of the two longitudinal beams 50. For example, the battery 100 comprises three protruding portions, the three protruding portions are spaced, and two adjacent protruding portions form the first avoidance portion 150 or the second avoidance portion 151 respectively. Each of the three protruding portions may be a hollow structure, inside which the battery cells 210 or other components of the battery 100 may be accommodated.

The butting structure 40 of the battery 100 may comprise a high-voltage electrical connecting element and a low-voltage electrical connecting element. The high-voltage electrical connecting element and the low-voltage electrical connecting element may be connected to the battery cells 210 in the case for outputting or inputting electrical energy or for inputting or outputting a low voltage signal of the battery 100. The butting structure 40 may further comprise a water-cooling connecting element for thermal management of the battery cells 210, and a coolant may be inputted or outputted through the butting structure 40 to regulate the temperature of the battery 100.

In some embodiments, the vehicle has a butting component corresponding to the butting structure 40 of the battery 100. The butting component of the vehicle may be a component capable of connecting to the butting structure 40 of the battery 100 to input or output electrical energy, the low-voltage signal, and/or the coolant to the battery 100.

It should be noted that in FIGS. 2 and 3, the position of the butting structure 40 is roughly shown only as a block diagram. The block diagrams in FIGS. 2 and 3 do not represent a specific structure of the butting structure 40.

In the above solutions, the first avoidance portion 150 and the second avoidance portion 151 are configured to avoid the one pair of the longitudinal beams 50 of the vehicle respectively, and the butting structure 40 is arranged between the first avoidance portion 150 and the second avoidance portion 151, so that, on the one hand, the butting structure 40 can reduce the risk of energy density decrease of the battery 100 using the space between the one pair of the longitudinal beams 50 because of reducing the space required for the battery cells 210 due to arrangement of the butting structure 40, so that the battery 100 has a high volumetric energy density; and on the other hand, the butting structure 40 of the vehicle and the butting structure 40 of the battery 100 can further complete the butting action between the first avoidance portion 150 and the second avoidance portion 151, and reduce the interference of an external structure on the butting action, so that the butting is safer.

According to some embodiments of the present application, the butting structure 40 comprises an electrical connection portion 41, the first battery module 20a, the third battery module 20c, and the second battery module 20b are connected to each other in series, and the first battery module 20a and the second battery module 20b are electrically connected to a positive electrode and a negative electrode of the electrical connection portion 41 respectively.

The electrical connection portion 41 may be a partial structure of the butting structure 40. The electrical connection portion 41 is configured to input or output a current. In some embodiments, the first battery module 20a, the third battery module 20c, and the second battery module 20b are connected to each other in series to form an entirety. The electrical connection portion 41 is located in the first avoidance portion 150 and the second avoidance portion 151. The positive or negative electrode of the electrical connection portion 41 may be connected to the first battery module 20a located on one side of the avoidance portion 15, and the other electrode of the electrical connection portion 41 may be connected to the second battery module 20b located on the other side of the avoidance portion 15.

In the above solutions, the first battery module 20a, the third battery module 20c, and the second battery module 20b are arranged to be connected to each other in series, and the first battery module 20a and the second battery module 20b are arranged to be electrically connected to the positive electrode and the negative electrode of the electrical connection portion 41 respectively, so that an electrical connection path among the battery modules 20 is short, thereby saving the costs and occupied space of a conductive material for the electrical connection, and contributing to the cost control and the improvement of the volumetric energy density of the battery 100.

According to some embodiments of the present application, some embodiments of the present application further provide a vehicle, comprising a vehicle body and the battery 100 provided above. The vehicle body has a longitudinal beam 50. The battery 100 is connected to the vehicle body, and the longitudinal beam 50 runs through an avoidance portion 15 along a first direction x.

According to some embodiments of the present application, a battery 100 is provided. The battery 100 comprises a case 10, a battery cell 210, and a thermal management component 30.

The case 10 has an avoidance portion 15 for avoiding a longitudinal beam 50 of a vehicle, wherein the avoidance portion 15 runs throughout the case 10 along a first direction x, and an opening of the avoidance portion 15 faces a second direction z. The case 10 may be in a strip shape, and a length direction of the case 10 may be a third direction y, and the first direction x, the second direction z, and the first direction x are perpendicular pairwise. The avoidance portion 15 may be a recessed portion formed on the case 10. In some embodiments, the avoidance portion 15 comprises a first avoidance portion 150 and a second avoidance portion 151. The first avoidance portion 150 and the second avoidance portion 151 avoid a pair of longitudinal beams 50 of the vehicle respectively.

There are a plurality of battery cells 210 inside the case 10. The plurality of the battery cells 210 may be divided into a plurality of battery modules 20, and the battery modules 20 may comprise a first battery module 20a, a second battery module 20b, and a third battery module 20c.

Each of the battery modules 20 comprises a plurality of battery cell groups 21, the plurality of battery cell groups 21 are arranged side by side along a length direction of the battery cells 210, and each of the battery cell groups 21 comprises battery cells 210 stacked along a thickness direction of the battery cells 210. In the battery modules 20, the plurality of battery cell groups 21 are fastened by a pair of end plates 22 and a bundling element 23.

Internal space of the case 10 can be divided into an upper space and a lower space. The lower space is located below the avoidance portion 15. A projection of the upper space in the third direction y and a projection of the avoidance portion 15 in the third direction y at least partially overlap.

A plurality of third battery modules 20c are arranged in the lower space along the third direction y, and the first battery module 20a and the second battery module 20b are arranged in the upper space, wherein the first battery module 20a may be located on one side of the first avoidance portion 150 facing away from the second avoidance portion 151, and the second battery module 20b may be located on one side of the second avoidance portion 151 facing away from the first avoidance portion 150. In some embodiments, three third battery modules 20c are provided in the lower space, a first battery module 20a is provided above the third battery module 20c at one end, and a second battery module 20b is provided above the third battery module 20c at the other end.

The number of thermal management components 30 may be three, and the thermal management components 30 comprise a first thermal management component 31, a second thermal management component 32, and a third thermal management component 33. The first thermal management component 31 is arranged below the first battery module 20a, and the first thermal management component 31 can regulate temperature of the first battery module 20a. The second thermal management component 32 is arranged below the second battery module 20b, and the second thermal management component 32 can regulate temperature of the second battery module 20b. The third thermal management component 33 is arranged below all of the third battery modules 20c, and the third thermal management component 33 can regulate temperatures of the third battery modules 20c.

The first thermal management component 31, the second thermal management component 32, and the third thermal management components 33 may be connected to each other in series or in parallel.

The above description merely provides preferred embodiments of the present application, and is not intended to limit the present application. For those skilled in the art, the present application may have various modifications and alterations. Any modification, equivalent replacement, improvement, etc. made within the spirit and principle of the present application shall fall within the scope of protection of the present application.

## Claims

1. A battery, comprising:
a case having an avoidance portion for avoiding a longitudinal beam of a vehicle, wherein the avoidance portion runs throughout the case along a first direction, and an opening of the avoidance portion faces a second direction; and
a plurality of battery cells arranged inside the case, wherein a projection of at least one of the battery cells along a third direction overlaps with a projection of the avoidance portion along the third direction, the first direction, the second direction, and the first direction are perpendicular pairwise, and the third direction is a width direction of the avoidance portion.

2. The battery according to claim 1, wherein
at least two layers of the battery cells are stacked in the case along the second direction; and
among the at least two layers of the battery cells, a projection of at least one of the battery cells in at least one layer of the battery cells along the third direction and the projection of the avoidance portion along the third direction overlap with each other, and a projection of at least one of the battery cells in at least one another layer along the third direction is completely misaligned with the projection of the avoidance portion along the third direction.

3. The battery according to claim 2, wherein
the battery further comprises thermal management components for regulating temperatures of the battery cells; and
a plurality of the battery cells located on one side of the avoidance portion along the third direction and located on a same layer are connected to a given one of the thermal management components.

4. The battery according to claim 3, wherein a plurality of the battery cells are provided on either side of the avoidance portion along the third direction; and
the battery cells located on different sides of the avoidance portion along the third direction are connected to different thermal management components respectively.

5. The battery according to claim 3 or 4, wherein at least one of the battery cells is provided on one side of the avoidance portion facing the inside of the battery along the second direction.

6. The battery according to claim 5, wherein the battery cells located on one side of the avoidance portion along the second direction and the battery cells located on one side of the avoidance portion along the third direction are connected to different thermal management components.

7. The battery according to claim 6, wherein the plurality of battery cells located on a same side of the avoidance portion along the second direction are connected to a given one of the thermal management components.

8. The battery according to any one of claims 1 to 7, wherein
the battery further comprises thermal management components for regulating temperatures of the battery cells;
the battery comprises a battery module, the battery module comprising a plurality of the battery cells;
the battery module comprises a first battery module and a second battery module respectively located on both sides of the avoidance portion along the third direction, and further comprises at least one third battery module located on one side of the avoidance portion facing the inside of the battery along the second direction, and the first battery module and the second battery module are located on a same side of the third battery module along the second direction; and
the first battery module, the second battery module, and the third battery module are connected to different thermal management components respectively.

9. The battery according to claim 8, wherein a plurality of third battery modules are provided on one side of the avoidance portion facing the inside of the battery along the second direction, and the plurality of third battery modules are connected to a given one of the thermal management components.

10. The battery according to claim 8 or 9, wherein the first battery module, the second battery module, and the third battery module each comprise a plurality of the battery cells arranged in a same manner.

11. The battery according to claim 10, wherein each of the battery modules comprises a plurality of battery cell groups, the plurality of battery cell groups are arranged side by side along a length direction of the battery cells, and each of the battery cell groups comprises battery cells stacked along a thickness direction of the battery cells; and
the battery module further comprises an end plate located on one side of the plurality of battery cell groups along the thickness direction of the battery cells, and a projection of the end plate and projections of the plurality of battery cell groups overlap with each other along the thickness direction of the battery cells.

12. The battery according to any one of claims 8 to 11, wherein the case comprises a first case portion and two second case portions respectively located on both sides of the first case portion along the third direction, and the first case portion and the two second case portions jointly form the avoidance portion.

13. The battery according to claim 12, wherein same ends of the two second case portions protrude from the first case portion along the second direction to form the avoidance portion between an end wall of the first case portion perpendicular to the second direction and side walls of the two second case portions facing the first case portion.

14. The battery according to claim 12 or 13, wherein
the number of layers of the battery cells provided in the first case portion is smaller than the number of layers of the battery cells provided in the second case portions.

15. The battery according to any one of claims 12 to 14, wherein
the battery further comprises a partition element located at a boundary between the first case portion and the second case portions.

16. The battery according to any one of claims 8 to 15, wherein the avoidance portion comprises a first avoidance portion and a second avoidance portion spaced along the third direction, the battery further comprises a butting structure located between the first avoidance portion and the second avoidance portion for butting with the vehicle to achieve current conduction and/or liquid conduction.

17. The battery according to claim 16, wherein the butting structure comprises an electrical connection portion, the first battery module, the third battery module, and the second battery module are connected to each other in series, and the first battery module and the second battery module are electrically connected to a positive electrode and a negative electrode of the electrical connection portion respectively.

18. A vehicle, comprising:
a vehicle body having a longitudinal beam; and
the battery according to any one of claims 1 to 17, wherein the battery is connected to the vehicle body, and the longitudinal beam runs through the avoidance portion along the first direction.
